# EUROPEAN PATENT APPLICATION

(11) **EP 4 721 542 A1**
(43) Date of publication of application: **08.04.2026**
(21) Application number: 25202051.6
(22) Date of filing: 15.09.2025
(51) Int. Cl.: A01B 69/04, A01B 79/00, G01C 21/20, G06V 20/10

(54) **DETERMINING A RECOMMENDED ROUTE FOR AN AGRICULTURAL VEHICLE**

(30) Priority: 26.09.2024 US 202463699307 P
(71) Applicant: Agco Corporation, Duluth, Georgia 30096 (US)
(72) Inventor: ROBILLARD, Jerome Matthieu, Jackson, 56143 (US); MURRAY, Timothy Allen, Jackson, 56143 (US)
(74) Representative: AGCO Intellectual Property Department

(57) **Abstract**

A mechanism for determining a recommended route for an agricultural vehicle. The recommended route is generated using indicators of crop population for different sub-regions of an agricultural region. Each indicator of crop population is produced by processing image data of the agricultural region.

## Description

### CROSS-REFERENCE TO RELATED APPLICATIONS

N/A.

### FIELD

Embodiments of the present disclosure relate to agricultural vehicles, and in particular to the determination of a recommended route for an agricultural vehicle.

### BACKGROUND

With ever-increasing population numbers and an ongoing interest in more environmentally friendly farming practices, there is a desire to improve the efficiency of performing agricultural tasks or processes. Examples of agricultural tasks or processes include ploughing, tilling, planting, spraying, fertilizing, harvesting and so on. Each of these activities plays a distinct role in the overall agricultural production cycle and their efficiency directly impacts the productivity and sustainability of farming operations.

During the performance of any agricultural task using an agricultural vehicle, there are a large number of decisions and actions that an operator of the agricultural vehicle needs to perform. In particular, they will need to decide upon a route taken by the agricultural vehicle and control the operation of one or more agricultural implements to perform the agricultural task(s). This can create a significant burden upon the operator, and places significant reliance upon the expertise and judgment of the operator to achieve successful outcomes.

There is an ongoing desire to improve the performance of an agricultural task, e.g., with the aim of achieving higher yields, reduced crop loss and/or improved crop quality. Other desirable aims for the outcome of agricultural tasks will be apparent.

### BRIEF SUMMARY

According to examples in accordance with this disclosure, there is provided an agricultural system comprising at least one processor configured to: receive image data of an agricultural region to undergo an agricultural task; process the image data to determine, as a plurality of indicators of crop population, a respective indicator of crop population for each of a plurality of subregions of the agricultural region; and determine a recommended route for an agricultural vehicle, for performing the agricultural task in the agricultural region, responsive to the plurality of indicators of crop population.

This proposed approach enables efficient and targeted agricultural operations by analyzing crop population across different areas of an agricultural region, such as a field and/or arable land. By processing image data to determine crop population indicators, is it possible to identify areas that may require more attention or resources, allowing for improved route planning. More particularly, determining a recommended route based on crop population indicators helps reduce unnecessary traversal of the field, potentially saving time, fuel, and reducing a risk of soil compaction and/or crop damage in areas with healthy crop populations. This targeted approach can lead to improved crop yields and more sustainable farming practices.

In some embodiments, the agricultural system may comprise a user interface configured to provide a visual representation of the recommended route. A visual representation or display of the recommended route provides an operator of the agricultural vehicle with useful information for performing a technical task of controlling and/or steering the agricultural vehicle.

In some embodiments, the image data comprises satellite imaging data and/or aerial photography data. Using satellite imaging data and/or aerial photography data provides comprehensive and consistent data that allows for detailed, precise and reliable analysis of crop populations across the agricultural region.

In some embodiments, the agricultural task is a crop planting operation, and the agricultural vehicle comprises a planter for performing the crop planting operation. Applying this system to crop planting operations allows for precise plant placement and routing based on existing crop population.

In some embodiments, the recommended route comprises one or more recommended waylines for the agricultural vehicle to follow. Providing specific waylines for the vehicle to follow ensures precise navigational guidance through the agricultural region that aligns with navigational approaches with which a vehicle operator would be accustomed or familiar. In other words, the use of waylines makes use of familiar operational patterns that align with established agricultural practices.

In some embodiments, the at least one processor is configured to: process the plurality of indicators of crop population to identify, if present, one or more target subregions comprising each, if any, subregion for which the respective indicator of crop population indicates a crop population below a first population threshold; and determine, as the recommended route, a route that, if followed by the agricultural region, would facilitate the performance of the agricultural task in each, if any, target subregion by the agricultural vehicle.

This feature allows the system to prioritize and route to areas/regions with low crop population, ensuring that these underperforming regions receive the necessary attention during agricultural operations (e.g., replanting or increased nutrition). By focusing on these target subregions, it is possible to improve overall field productivity.

In some embodiments, the recommended route avoids traversing the entirety of the agricultural region. By avoiding unnecessary traversal of the entire field, a significant reduction in the time and resources required for agricultural operations can be achieved. Moreover, reducing (unnecessary) field traversal also helps reduce soil compaction in areas that don't require immediate attention, promoting better soil health and potentially improving long-term crop yields.

In some embodiments, the at least one processor is configured to: process the plurality of indicators of crop population to identify, if present, one or more restricted subregions comprising each, if any, subregion for which the respective indicator of crop population indicates a crop population above a second population threshold; and determine, as the recommended route, a route that, if followed by the agricultural region, would avoid at least one of the one or more restricted subregions.

This embodiment helps to protects areas with high crop population from unnecessary disturbance during agricultural operations. By avoiding these restricted subregions, the system helps preserve healthy crop stands and prevents potential damage to the crop and/or soil from vehicle traffic.

In some embodiments, the agricultural system comprises a vehicle tracking system configured to track a geographic location of the agricultural vehicle, and wherein the at least one processor is configured to determine and update the recommended route using at least the tracked geographic location of the agricultural vehicle.

Real-time tracking of the agricultural vehicle allows for dynamic route updates based on the vehicle's current position. This ensures that the recommended route is updated to take account of deviations, e.g., due to obstacles or the like. The integration of vehicle tracking with route planning creates a closed-loop system that can continuously improve the route planning, improving efficiency of performing the agricultural task within the agricultural region and reducing the impact of any unexpected field conditions.

In some embodiments, the vehicle tracking system comprises a satellite-based geographic positioning system comprising at least one tracking element mounted to the agricultural vehicle. Satellite-based positioning provides highly accurate location data, enabling more precise navigation and route following. This accuracy helps to reduce a likelihood of overlap or gaps in the performance of the agricultural task.

In some embodiments, the agricultural system further comprises a vehicle control system configured to automatically control a travel direction of the agricultural vehicle to follow the recommended route using the tracked geographic location of the agricultural vehicle. Automatic control of the vehicle's travel direction enables precise implementation of the recommended route without the need for operator input. This can lead to more consistent and efficient performance of the agricultural task, as well as a reduction in operator fatigue.

In some embodiments, each indicator of crop population is a measure of predicted crop density in the respective subregion. Using crop density as an indicator provides a quantitative measure for assessing the health and productivity of different areas within the field. This allows for more objective and data-driven decision-making in agricultural operations.

In some embodiments, the at least one processor is configured to process the image data using a machine-learning method to determine, as the plurality of indicators of crop population, the respective indicator of crop population for each of the plurality of subregions of the agricultural region. The use of a machine-learning method to perform the processing of the digital image provides an accurate and reliable mechanism for generating the indicator of crop population.

In some embodiments, each subregion of the plurality of regions is arable land. *Focusing on arable land ensures that the analysis and recommendations are relevant to areas where agricultural operations can actually be performed. This prevents wasted computational resources on non-productive areas of the field.*

In some embodiments, the at least one processor is further configured to determine a recommended operation for an agricultural implement of the agricultural vehicle at each of a plurality of locations along the recommended route responsive to the plurality of indicators of crop populations. *By recommending operations to local crop population conditions, an operator of the agricultural vehicle can improve resource use. Moreover, providing location-specific implement recommendations leads to more targeted agricultural operations, reducing waste and improving efficiency of performing the agricultural task.*

In some embodiments, each recommended operation indicates a recommendation of whether or not to activate the agricultural implement at each of the plurality of locations. *This approach enables selective activation of the implement, functioning to conserve resources and reduce a risk of performing potentially unnecessary agricultural operations in areas with sufficient crop population. In other words, this approach provides a more efficient use of resources by activating the agricultural implement only in areas where it is needed. This also helps to reduce a risk of unnecessary disturbance or treatment of subregions with sufficient plant density, reducing environmental impact, preserving soil health and reducing a risk of plant*/*crop damage in those regions.*

In some embodiments, for each of the plurality of locations, the recommended operation for said location indicates a recommendation to activate the agricultural implement responsive to said location lying in a subregion for which the respective indicator of crop population indicates a crop population below a third population threshold.

*This approach recommends selective activation of the implement, functioning to conserve resources and reduce a risk of performing potentially unnecessary agricultural operations in areas with sufficient crop population. In other words, this approach provides a more efficient use of resources by activating the agricultural implement only in areas where it is needed, based on the indicator of crop population in the active subregion. This also helps to reduce a risk of unnecessary disturbance*/*treatment of subregions with sufficient crop density, reducing environmental impact, preserving soil health and reducing a risk of crop damage in those regions.*

In some embodiments, for each of the plurality of locations, the recommended operation for said location indicates a recommendation to deactivate the agricultural implement responsive to said location lying in a subregion for which the respective indicator of crop population indicates a crop population above a fourth population threshold.

In some embodiments, the agricultural system further comprises an implement control system configured to control the operation of the agricultural implement of the agricultural vehicle to follow the recommended operation. *Automated implement control facilitates more consistent and accurate performance of the agricultural task, as well as reducing the cognitive load on the operator.*

According to examples in accordance with this disclosure, there is provided an agricultural system comprising: the agricultural system as herein described; and the agricultural vehicle.

According to examples in accordance with this disclosure, there is provided a computer-implemented method comprising: receiving image data of an agricultural region to undergo an agricultural task; processing the image data to determine, as a plurality of indicators of crop population, a respective indicator of crop population for each of a plurality of subregions of an agricultural region; and determining a recommended route for an agricultural vehicle, for performing an agricultural task in the agricultural region, responsive to the plurality of indicators of crop populations.

The computer-implemented method may be adapted to perform the functions of any herein described agricultural system and vice versa. Other technical features may be readily apparent to one skilled in the art from the following figures, descriptions, and claims.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the disclosure will now be described, by way of example only, with reference to the accompanying drawings, in which:
FIG. 1 is a flowchart illustrating a proposed method.
FIG. 2 illustrates an example workflow of the proposed method.
FIG. 3 is a flowchart illustrating a variant method.
FIG. 4 is a flowchart illustrating a variant method.
FIG. 5 illustrates an example agricultural implement.
FIG. 6 illustrates an example agricultural system.

### DETAILED DESCRIPTION

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method acts, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manner.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

This disclosure relates to a mechanism for determining a recommended route for an agricultural vehicle. The recommended route is generated using indicators of crop population for different sub-regions of an agricultural region. Each indicator of crop population is produced by processing image data of the agricultural region.

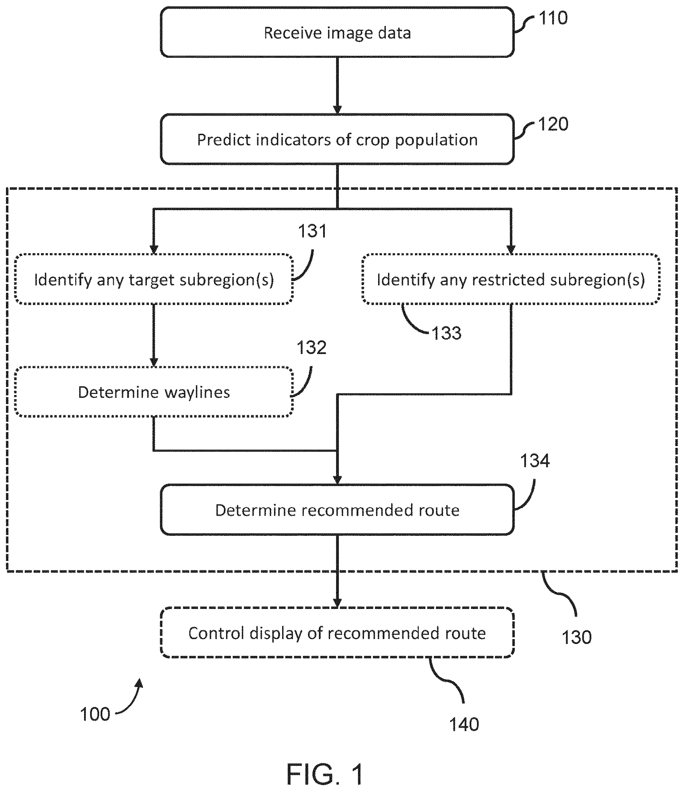

FIG. 1 is a flowchart illustrating a proposed computer-implemented method 100. The computer-implemented method 100 is performed by at least one processor of an agricultural system, more details of which will be provided later in this disclosure.

The method 100 comprises an act 110 of receiving image data of an agricultural region to undergo an agricultural task. In some examples, the agricultural region comprises (e.g., only) arable land.

The image data may be generated by a satellite imaging system and/or an aerial photography image system. As such, the image data may comprise satellite imaging data and/or aerial photography data.

The image data is a digital representation of the agricultural region to undergo the agricultural task. In particular, the image data may comprise a digital image of the agricultural region in which the digital image comprises a plurality of pixels having one or more pixel values. Each pixel represents a different part of the agricultural region, with the pixel value(s) of said pixel representing an appearance of said part. The image data may, for instance, comprise visible light image data, infrared image data, ultraviolet image data and/or image data for any other wavelength of light.

It will be appreciated that, in practice, each pixel of the digital image is associated with a corresponding geographic location (e.g., a longitude and a latitude).

The method 100 also comprises an act 120 of processing the image data to determine, for each of a plurality of subregions of the agricultural region, a respective indicator of crop population in said subregion.

The indicator of crop population may have a binary, categorical or numeric value. Thus, the indicator of crop population may be a binary, categorical, or numeric indicator of crop population.

A binary indicator may represent the presence or absence of crop(s) in the subregion, such as "crop detected" or "no crop detected". As another example, the binary indicator may represent a relative crop density in the subregion, such as "high density" or "low density", which may indicate whether or not a predicted crop density breaches a predetermined density threshold.

A categorical indicator may classify the crop population in the subregion into discrete categories, such as "low", "medium", or "high" density/population. This may, for instance, indicate into which of a plurality of density/population bands a crop density/population of the subregion falls.

A numeric indicator may provide a quantitative measure of crop population in the subregion, such as an estimated number of plants or amount of crop per unit area (i.e., a measure of crop density) or a percentage of crop ground cover. Thus, in some examples, the indicator of crop population is a measure of predicted crop density in the subregion.

One approach to performing act 120 is to process the image data using a vegetation index algorithm designed to determine a vegetation index, such as the normalized difference vegetation index (NVDI) or the enhanced vegetation index (EVI), for different parts of the image data. This produces an index digital image having pixels with a value that represents the determined vegetation index. The vegetation index thereby provides a numeric indicator of crop population.

In some examples of this approach, each pixel represents a different subregion of the agricultural region, and the corresponding pixel value (i.e., the vegetation index) functions as the indicator of crop population in said subregion.

In other examples of this approach, act 120 further processes the index digital image to identify groups of pixels (e.g., segments of the index digital image) contiguously connected to one another and sharing similar vegetation indices. This may be performed using a segmentation algorithm, such as a blob detection algorithm. Each group of pixels represents a different subregion of the agricultural region. Within each group of pixels, the average vegetation index in that group may function as the indicator of crop population.

In a variant of this approach, the (original) digital image may undergo image segmentation to subdivide the area representing the agricultural region in the digital image into a plurality of sub-areas, each representing a different subregion. This subdivision may be performed using a segmentation or edge detection technique to identify different subregions. Each subregion may then be processed using a vegetation index algorithm to determine an indicator of crop population for said subregion.

Examples of vegetation index algorithms are well known, such as those discussed in Gao, Lin, et al. "Remote sensing algorithms for estimation of fractional vegetation cover using pure vegetation index values: A review." ISPRS Journal of Photogrammetry and Remote Sensing 159 (2020): 364-377.

Another approach to performing act 120 is to process the image data using a (color) thresholding approach. In a color thresholding approach, the image data may be processed to identify areas of vegetation based on their color characteristics. This method typically involves setting specific color thresholds that correspond to the expected color range of plants or crop.

The process may begin by, if required, converting the image data into a color space that separates crop/vegetation from other elements more effectively, such as the HSV (Hue, Saturation, Value) color space. In this space, more dense crop/vegetation may fall within a particular range of hue values, whereas less dense crop/vegetation may take different hue values. Act 120 may then apply a threshold to isolate pixels that fall within a predetermined range for vegetation. Pixels that meet the threshold criteria are classified as vegetation (i.e., "plants detected"), while those that do not are classified as non-vegetation (i.e., "no plants detected").

In some examples of this approach, each pixel represents a different subregion of the agricultural region, and the corresponding pixel classification functions as the indicator of crop population in said subregion.

In other examples of this approach, the processed digital image is further processed to identify groups of pixels (e.g., segments of the processed digital image) contiguously connected to one another and sharing similar classifications. This may be performed using a segmentation algorithm, such as a blob detection algorithm. Each group of pixels represents a different subregion of the agricultural region.

Another approach to performing act 120 is to process the image data using an appropriately trained machine-learning method. Thus, act 120 may comprise processing the image data using a machine-learning method to determine, for each of a/the plurality of subregions of the agricultural region, the respective indicator of crop population in said subregion.

By way of example, the machine-learning method may be trained to perform a dual task of image segmentation and indicator generation. Thus, act 120 may comprise using a machine-learning method to process image data to identify or segment a plurality of subregions and produce, for each subregion, a respective indicator of crop population in said subregion.

Suitable machine-learning methods include (artificial) neural networks, support vector machines (SVMs), Naïve Bayesian models and decision tree algorithms, although other appropriate examples will be apparent to the skilled person.

There are a number of well-established approaches for training a machine-learning method. One widely used learning approach is known as a supervised learning approach, which makes use of a large database of known input and output data. In such techniques, the machine-learning method is modified until an error between predicted output data, obtained by processing the input data with the machine-learning method, and the actual (known) output data is close to zero, i.e., until the predicted output data and the known output data converge. The value of this error is often defined by a cost function, which can be selected or defined by an appropriately skilled individual. The precise mechanism for modifying the machine-learning method depends upon the type of model. Example approaches for use with a neural network include gradient descent, backpropagation algorithms and so on.

It is not essential that the machine learning method(s) be trained by the at least one processor that makes use of the machine-learning method. Rather, the machine-learning method(s) may be trained in advance of their usage (i.e., exploited for performing inference) by the at least one processor. More specifically, the machine-learning method(s) may be trained by a dedicated training processing system, such as a cloud-based processing system, external to the agricultural vehicle and/or at least one processor that makes use of the machine-learning method(s). The trained machine-learning method(s) may be installed within the at least one processor using any suitable or known means.

For use in the above-described approach, during training of the machine-learning method using a supervised learning technique, the known input data comprises example image data. The corresponding known output data comprises, for each instance of image data, annotated segments of the image data (each annotation providing the indicator of crop population in said segment). In particular, the indicator of crop population may be an indicator of a crop population of a specific/desired crop.

Other approaches for performing act 120 will be readily apparent to the skilled person.

The method 100 also comprises an act 130 of determining a recommended route for the agricultural vehicle. The recommended route is a route for performing the agricultural task in the agricultural region, and is generated responsive to the plurality of indicators of crop population. Thus, act 130 is a route determination process.

The recommended route is therefore generated to take account of crop populations, e.g., to focus upon areas of low crop population (e.g., where additional performance of an agricultural task such as planting is required) and/or avoid areas of higher crop population (where performance of the agricultural task, such as planting, may damage existing crop).

By way of example, the recommended route may be represented as a series of geographic coordinates, such as latitude and longitude pairs, that define waypoints along a path to be followed by the agricultural vehicle. These coordinates may effectively correspond to specific locations in the agricultural region where the vehicle should travel. More particularly, the recommended route may be represented as a continuous curve or spline in a global coordinate space (e.g., defining latitude and longitude co-ordinates). This provides smoother transitions between waypoints and a more precise path for the agricultural vehicle to follow.

Upon being taught that a recommended route for an agricultural region can be generated responsive to a plurality of indicators of crop population in subregions of said agricultural region, the skilled person would be readily capable of developing or defining a wide variety of route generation algorithms (e.g., pathfinding or path planning algorithms) that exploit this teaching. A non-exhaustive set of example approaches for performing act 130 to generate the recommended route are hereafter described for clarity and improved understanding.

Examples of pathfinding algorithms include grid-based algorithms, which subdivide the agricultural region into a grid of cells and search for the optimal path through this grid. Other examples include visibility graph algorithms, which create a graph of so-called visible vertices (e.g., field boundaries) and find the shortest path through this graph.

The skilled person will appreciate that a pathfinding algorithm may be a cost-based pathfinding algorithm that assigns numerical values (i.e., a cost or cost value) to different (sub)regions or path segments, then calculates and compares the cumulative costs of potential routes to identify the path or route with a lowest cumulative cost, which may function as the recommended route.

Specific examples of suitable pathfinding algorithms include the A* (A-star) search algorithm; Dijkstra's algorithm; Traveling Salesman Problem (TSP) algorithms; and the D (D-star) algorithms. Other examples will be readily apparent to the skilled person.

In some approaches, the recommended route avoids traversing the entirety of the agricultural region.

In some examples, the recommended route comprises one or more recommended waylines for the agricultural vehicle to follow. In the field of agriculture, a wayline is typically a straight path taken by an agricultural vehicle when performing an agricultural task. Waylines typically runs parallel or near parallel to at least one other wayline.

Thus, act 131 may comprise a subact 132 of determining one or more waylines and a subact 134 of determining a recommended route (using the determined wayline(s)).

In some examples, act 130 comprises a subact 131 of processing the plurality of indicators of crop population to identify, if present, one or more target subregions comprising each, if any, subregion for which the respective indicator of crop population indicates a crop population below a first population threshold.

For instance, if an indicator for a subregion is a binary indicator, act 130 may define the subregion as a target subregion when the binary indicator takes a first value (e.g., representing a "low density" or "no crop detected" state), which corresponds to the crop population in the subregion being below the first threshold population. Conversely, act 130 may not define said subregion as a target subregion when the binary indicator takes a second, different value (e.g., representing a "high density" or "crop detected" state), which corresponds to the crop population being above the first threshold population.

As another example, if an indicator for a subregion is a categorical indicator, act 130 may define the subregion as a target subregion when the categorical indicator indicates a category of lower crop populations (e.g. "low" or "medium" density), which corresponds to the crop population in the subregion being below the first threshold population. Act 130 may not define said subregion as a target subregion when the binary indicator indicates a category of higher crop populations (e.g. "high" density), which corresponds to the crop population in the active subregion being above the first threshold population.

As another example, if an indicator for a subregion is a numeric indicator, act 130 may simply comprise comparing the numeric value directly to the first threshold population. It may define the subregion as a target subregion when the numeric indicator is below the first threshold population, and not define the subregion as a target subregion it when the indicator is above the first threshold population.

In such approaches, act 130 may further comprise determining, as the recommended route, a route that, if followed by the agricultural region, would facilitate the performance of the agricultural task in each, if any, target subregion by the agricultural vehicle.

In particular, act 130 may comprise determining 134 a recommended route that visits each target subregion. Pathfinding or path planning algorithms may be used to generate the recommended route for visiting each target subregion, examples of which have been previously described.

In some approaches, act 130 may comprise defining the recommended route to achieve performance of the agricultural task within each target subregion.

An agricultural vehicle will only be able to perform an agricultural task within a limited or constrained region around the agricultural vehicle. Thus, the agricultural vehicle will be associated with an interaction zone that defines the region or zone in the vicinity of the agricultural vehicle with which the agricultural implement interacts in order to perform the agricultural task. An alternative label for an interaction zone is a working area or working region of the agricultural vehicle.

The effect of an interaction zone means that, in practice, any subregion of the agricultural region may require multiple traverses with the agricultural vehicle to successfully and completely perform the agricultural task within said subregion. This occurs when the size of the interaction zone around the agricultural vehicle (which represents the area in which the agricultural vehicle can perform the agricultural task), is smaller than the total area of said subregion. For example, if the agricultural task involves planting or fertilizing, the width of the planter or spreader for the vehicle may be narrower than the width of the target subregion.

Act 130 may correspondingly determine the recommended route to include a path through each target subregion that, if followed by the agricultural vehicle, results in complete coverage of the target subregion by the interaction zone.

One approach to determining such a recommended route is to generate 132 one or more waylines for each target subregion. The generation of the recommended route may then connect, in subact 134, the generated wayline(s) together to produce the recommended path.

As previously explained, a wayline defines a straight path taken by an agricultural vehicle when performing an agricultural task, and is a conventional tactic employed by agricultural workers to efficiently traverse a region whilst causing minimal crop damage and maximizing crop area. Waylines typically runs parallel or near-parallel to at least one other wayline.

In some examples, the generation of waylines for a target subregion may involve determining an orientation for the waylines within that subregion. This orientation may be selected based on the shape of the target subregion and/or the capabilities of the agricultural vehicle. For instance, the orientation may be chosen to minimize the number of turns required to traverse the target subregion, which can improve efficiency and reduce soil compaction.

It will be appreciated that the (maximum) spacing between waylines may be determined or defined based on the width of the interaction zone of the agricultural vehicle. For example, if the agricultural vehicle has an interaction zone with a width of X meters, the waylines may be spaced no more than X meters apart to ensure complete coverage of the target subregion. In other words, the spacing between the waylines in a target subregion may be no greater than the width of the interaction zone of the agricultural vehicle. Preferably, the waylines are positioned to minimize or reduce overlap.

In some examples, act 130 comprises a subact 133 of processing the plurality of indicators of crop population to identify, if present, one or more restricted subregions comprising each, if any, subregion for which the respective indicator of crop population indicates a crop population above a second population threshold.

In such approaches, act 130 may comprise determining, in subact 134, as the recommended route, a route that, if followed by the agricultural region, would avoid at least one of the one or more restricted subregions, and preferably all of the one or more restricted subregions. Suitable pathfinding algorithms can be readily configured or adapted to produce a recommended route that avoids any restricted subregions, e.g., by defining suitable boundary conditions for the pathfinding algorithm (e.g., treating the restricted subregions as regions outside of the agricultural region in which a route is to be defined).

For example, in a cost-based pathfinding algorithm, the restricted subregions may be assigned infinite or very high cost values, effectively making them impassable. For example, in a visibility graph algorithm, the algorithm may create a graph connecting visible corners of the restricted subregion(s) and the boundaries of the agricultural region, then find the shortest path through this graph to generate a route for the agricultural vehicle.

In some examples, act 130 comprises determining a recommended route that traverses the entirety of the agricultural region whilst avoiding any restricted subregion. This can, for instance, achieve full coverage and/or performance of the agricultural task in any non-restricted subregion.

In other examples, the approach of identifying and avoiding restricted subregions may be performed in conjunction with the approach of identifying and traversing target subregions (previously explained). Thus, act 130 may comprise determining a recommended route that, if followed, would cause the agricultural vehicle to traverse each target subregion whilst avoiding any restricted subregion.

As an example, for use with a cost-based pathfinding algorithm, target subregions may be assigned low cost values and restricted subregions may be assigned very high or infinite cost values. The cost-based pathfinding algorithm, such as the A* or Dijkstra's algorithm, may then be used to find the lowest-cost path through the agricultural region that visits the target subregions. This approach functions to prioritize visiting target subregions while avoiding restricted subregions.

If employed, the second population threshold may be greater than the first population threshold. This effectively defines intermediate subregions of the agricultural region - which are parts of the agricultural region that are neither target subregions nor restricted subregions. The intermediate subregions effectively represent areas through which the recommended route may pass (i.e., are not restricted) but are not necessarily targeted. Preferably, if a cost-based pathfinding algorithm is employed, then a cost value assigned to such intermediate subregion(s) is greater than the that assigned to any target subregions and less than that assigned to any restricted subregion.

In some cases, the agricultural region may have one or more predefined paths along which the agricultural vehicle is permitted or preferred to move, e.g., when not in a target region. The predefined path(s) may be defined based on historical data or operational guidelines to ensure efficient navigation and minimal disruption to the crops. The predefined path(s) can serve as main arteries of travel within the agricultural region, guiding the agricultural vehicle between different target subregions or to specific areas of interest.

Act 130 may be configured to generate the recommended route to follow the predetermined path(s) whenever possible, e.g., especially when transitioning between target subregions or when navigating through intermediate subregions (if determined). By aligning the recommended route with these predefined paths, there is reduced need for creating new paths, thereby reducing potential damage to existing crop, soil and/or the environment of the agricultural region.

The predetermined path(s) may be defined by the path(s) taken by the same or another agricultural vehicle during an earlier performance of the same or another agricultural task. For instance, if a previous task involved harvesting or treatment applications, the paths used during these operations could be logged and stored in a system database. When generating a new recommended route, act 130 may access this historical path data and incorporate it into the route planning process. This not only ensures consistency in vehicle navigation but also helps to maintain the structural integrity of the soil and existing crop formations by reducing unnecessary variations in vehicle movement across the agricultural region.

The skilled person will readily appreciate how the predetermined path(s) can be incorporated into the route determination process. For instance, the predetermined path(s) may be assigned lower cost values in a cost-based pathfinding algorithm, encouraging the pathfinding algorithm to prefer these paths when determining the recommended route. In some cases, the route determination process may first attempt to construct a route using only predetermined paths, and only deviate from these paths when necessary to reach target subregions or avoid restricted areas.

In some examples, the method 100 further comprises an act 140 of controlling a user interface to provide a visual representation (i.e., display) of the recommended route. This visual representation can be particularly useful for operators of the agricultural vehicle, allowing them to easily understand and follow the recommended route.

The visual representation or display may take, for instance, the form of a 2D overhead map view of the agricultural region with the recommended route clearly marked. As another example, the visual representation or display may take the form of a 3D perspective view that simulates the operator's view from the vehicle. The visual representation may include color-coding or other visual indicators to differentiate between target subregions, restricted subregions, and intermediate areas.

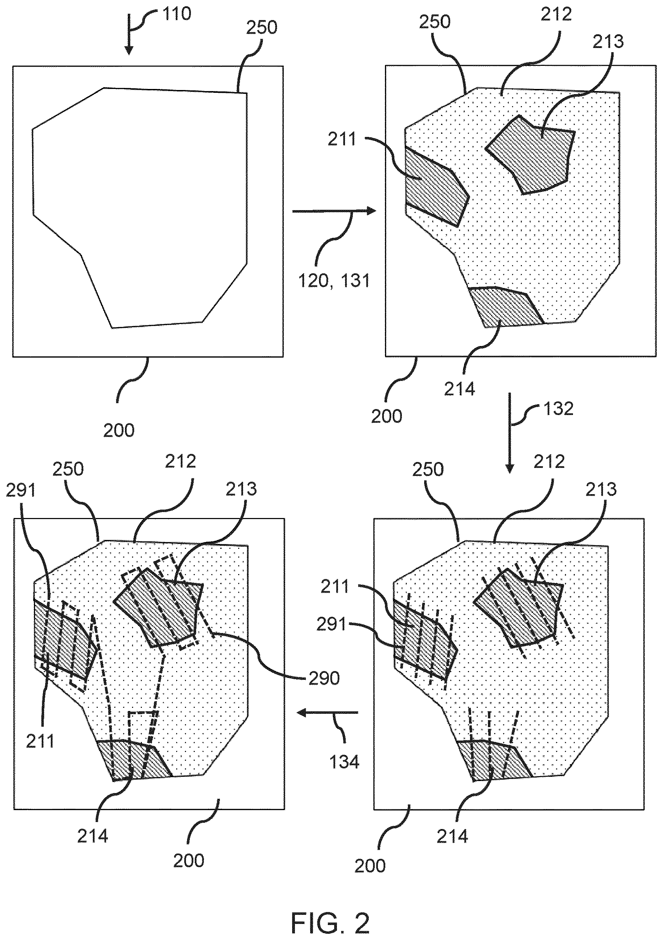

FIG. 2 conceptually illustrates an example workflow 20 performed when executing the method 100 illustrated by FIG. 1.

As previously explained, the method processes image data 200 of an agricultural region 250. The image data may, for instance, comprise a digital image (such as a satellite image) of the agricultural region. The image data is received in an act 110, as previously exemplified.

The method processes (in an act 120) the image data 200 to determine, for each of a plurality of subregions 211, 212, 213, 214 of the agricultural region, a respective indicator of crop population in said subregion. This is illustrated in FIG. 2 using different patterns for the illustrated subregions.

The illustrated method also processes (in an act 131) the plurality of indicators of crop population to identify, if present, one or more target subregions 211, 213, 214 comprising each, if any, subregion for which the respective indicator of crop population indicates a crop population below a first population threshold. Other subregion(s) of the agricultural region 250 may be identified, e.g., any non-target subregions 212 such as an intermediate subregion 212 or restricted subregions (not present in the illustrated example).

The method also determines (in an act 130 - here formed of sub-acts 132, 134) a recommended route for an agricultural vehicle, for performing the agricultural task in the agricultural region, responsive to the plurality of indicators of crop population.

In the illustrated example, the method is configured to determine (in a sub-act 132) one or more recommended waylines 291 for the agricultural vehicle to follow. The recommended wayline(s) are here waylines for traversing each target region 211, 213, 214 that, if followed, would facilitate the performance of the agricultural task in each target subregion by the agricultural vehicle. Approaches for determining suitable waylines have been previously described.

The method is also configured to determine, in a sub-act 134, a recommended route 290 that includes or comprises the one or more recommended waylines 291. This can be performed by connecting the waylines 291 using a suitable pathfinding algorithm to create a continuous route 290 that traverses all target subregions 211, 213, 214 in an efficient manner. The recommended route 290 may be refined to reduce travel distance, reduce turns, or satisfy other criteria based on the specific requirements of the agricultural task and vehicle capabilities.

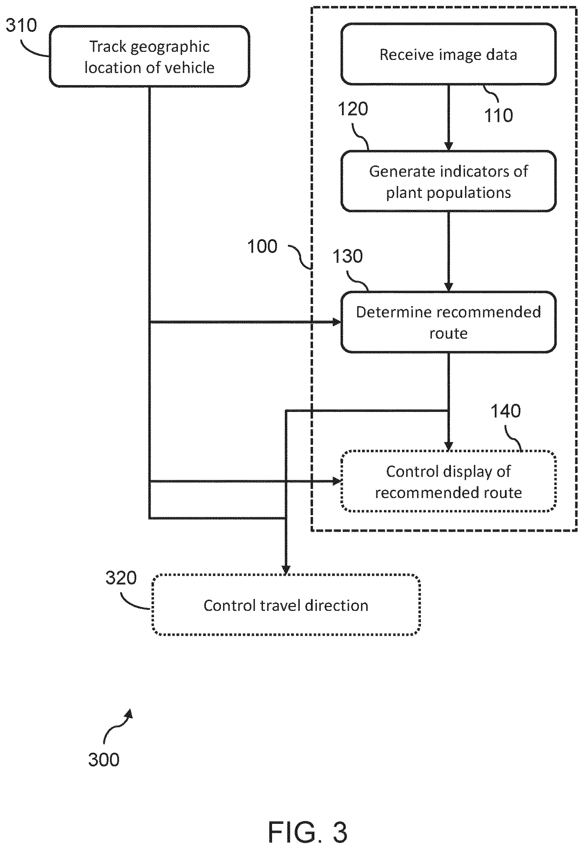

FIG. 3 illustrates a proposed method 300 that may be performed by the agricultural system.

The method 300 comprises the method 100 previously described. The method 100 is performed by at least one processor of the agricultural system.

The method 300 also comprises an act 310 of tracking a geographic location of the agricultural vehicle. Act 310 may be performed by a vehicle tracking system of the agricultural system, examples of which are provided later in this disclosure.

In such examples, act 130 (of method 100) of determining the recommended route may further use the tracked geographic location of the agricultural vehicle to determine the recommended route. For instance, the tracked geographic location may define a starting point for the recommended route, e.g., calculate an efficient path for the agricultural vehicle to reach the target subregions identified in earlier examples. By considering the vehicle's current location relative to these target subregions, act 130 is able to prioritize and sequence the visitation of target subregions to minimize travel time and fuel consumption.

Preferably, act 130 also comprises updating the recommended route using the recommended route using at least the tracked geographic location of the agricultural vehicle. In this way, the tracked location can be used to continuously update and refine the recommended route as the agricultural vehicle moves. This real-time adjustment capability enables the system to account for any deviations from the original recommended route (e.g., due to encountering obstacles or adverse field conditions) that may occur during the performance of the agricultural task.

In this way, method 300 may be performed iteratively, to repeatedly update the recommended route responsive to a tracked geographic location of the agricultural vehicle. This provides useful information for an operator of the agricultural vehicle to perform a technical task of steering or maneuvering the agricultural vehicle.

If act 140 is performed in method 100, then the visual representation (i.e., display) may further show the tracked geographic location of the agricultural vehicle with respect to the agricultural region, which may update as the vehicle moves through the agricultural region. This feature can help operators maintain awareness of their progress along the recommended route and make any necessary adjustments.

In some examples, method 300 further comprises an act 320 of automatically controlling a travel direction of the agricultural vehicle to follow the recommended route using the tracked geographic location of the agricultural vehicle.

In some examples, the automatic control of the agricultural vehicle's travel direction may be implemented through a vehicle control system. This vehicle control system may include appropriate components such as steering actuators, drive train controllers, and a central processing unit that interprets the recommended route and the tracked geographic location to generate appropriate control signals. For instance, such a vehicle control system may employ a closed-loop control mechanism, comparing the vehicle's actual geographic location and heading with the recommended route. Any deviations from the intended path may be detected and corrected in real-time, ensuring precise navigation along the recommended route.

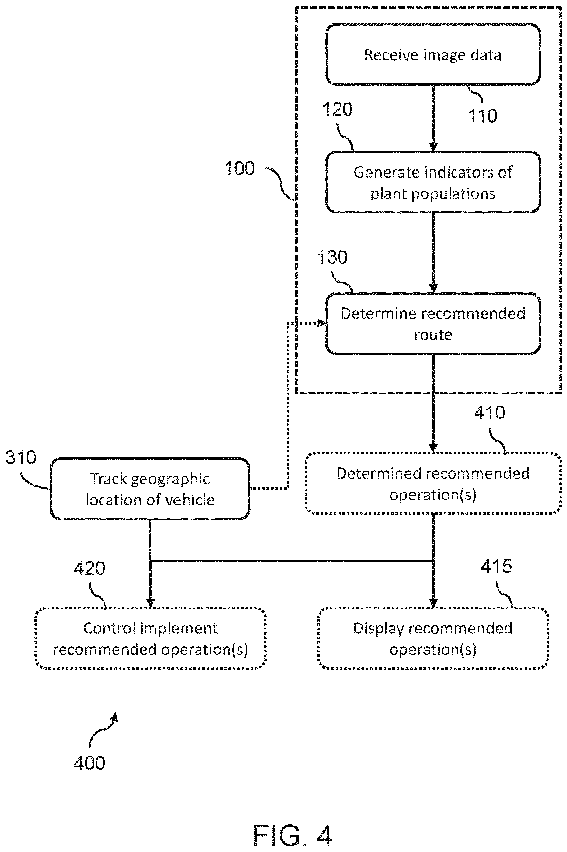

FIG. 4 illustrates another proposed method 400 that may be performed by the agricultural system. The method 400 comprises the method 100 previously described, which is performed by at least one processor of the agricultural system.

The method 400 may further comprise the method 300 and any optional acts of method 300 previously described. These are not illustrated in full for the sake of illustrative clarity.

The method 400 further comprise an act 410 of determining a recommended operation for an agricultural implement of the agricultural vehicle at each of a plurality of locations along the recommended route. This determination is made responsive to the plurality of indicators of crop populations.

The recommended operation for the agricultural implement may be determined for discrete locations along the recommended route. These locations may be defined at regular intervals or at key points such as transitions between different subregions.

In some examples, act 410 may comprise, for each location, evaluating the indicator of crop population for the subregion in which said location lies. The recommended operation may then be determined based on this evaluation.

By way of example, for each of the plurality of locations, the recommended operation may indicate a recommendation of whether or not to activate the agricultural implement at said location.

For instance, act 410 may comprise comparing the indicator of crop population for said location to one or more population thresholds. For each location, the method may comprise recommending an activation of the agricultural implement at said location if the location lies in a subregion where the respective indicator of crop population indicates a crop population below a third population threshold. Conversely, for each location, act 410 may comprise recommending a deactivation of the agricultural implement at said location if the location lies in a subregion where the respective indicator of crop population indicates a crop population above a fourth population threshold. The third and fourth population thresholds may be the same or different, and may be adjustable based on the specific agricultural task and implement being used.

The determination of whether to recommend an activation or a deactivation of the agricultural implement, for each of the plurality of locations, may be performed with binary, categorical, or numeric indicators of crop population.

In a first scenario, each indicator of crop population comprises a binary indicator of crop population. In this first scenario, for each location, act 410 may comprise recommending an activation of the agricultural implement when the binary indicator (for the subregion in which said location lies) takes a first value (e.g., representing a "low density" or "no plants detected" state), which corresponds to the crop population in the corresponding subregion being below the relevant threshold population. Similarly, in this first scenario, act 410 may comprise, for each location, recommending a deactivation of the implement when the indicator takes a second, different value (e.g., representing a "high density" or "plants detected" state), which corresponds to the crop population being above the relevant threshold population.

In a second scenario, each indicator of crop population comprises a categorical indicator of crop population. In this second scenario, for each location, act 410 may comprise recommending an activation of the agricultural implement when the categorical indicator (for the subregion in which said location lies) indicates a category of lower crop populations (e.g. "low" or "medium" density), which corresponds to the crop population in the corresponding subregion being below the relevant threshold population. Similarly, in this second scenario, act 410 may comprise, for each location, recommending a deactivation of the implement when the indicator when the indicator indicates a category of higher crop populations (e.g. "high" density), which corresponds to the crop population being above the relevant threshold population.

In a third scenario, each indicator of crop population comprises a numeric indicator of crop population. In this third scenario, for each location, act 410 may simply comprise comparing the numeric value of the numeric indicator (for the subregion in which said location lies) directly to the relevant threshold population. It may recommend an activation of the agricultural implement when the numeric indicator is below the relevant threshold population, and recommend a deactivation of the agricultural implement when the indicator is above the relevant threshold population.

In each case, act 410 functions to interpret the indicator for the subregion in which each location in relation to one or more threshold populations to determine whether to recommend an activation or a deactivation of the agricultural implement dependent upon said indicator.

The foregoing approach thereby provides a binary mechanism for determining a recommended operation of the agricultural implement (e.g., to activate or deactivate the implement) for each of a plurality of locations.

However, more granular recommendation techniques may be used where the agricultural task performable using the agricultural implement is one with variable properties. In such scenarios, act 410 may recommend a variable rate application for the agricultural implement, where, for each location, the recommended rate and/or amount of application (e.g., seeds, plants, fertilizer, pesticides, ploughing size) to be performed by the agricultural implement is dynamically adjusted responsive to the indicator of crop population in the subregion in which the location lies.

A number of example control techniques performable when the agricultural implement comprises a planter are hereafter described. For descriptive clarity, a "corresponding subregion" is the subregion in which the relevant location lies.

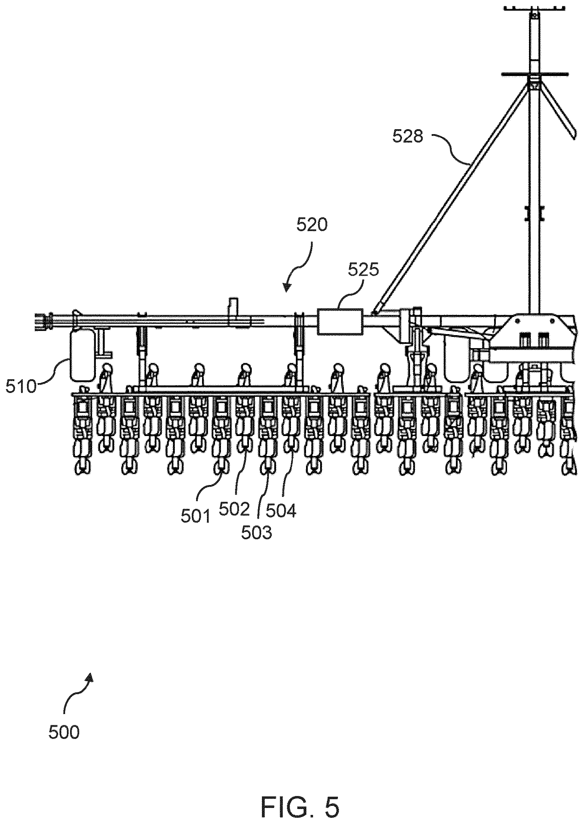

For improved contextual understanding, FIG. 5 illustrates a portion of an example planter 500. The planter 500 comprises a plurality of individual planting units 501, 502, 503, a wheel 510 and planting apparatus 520 for structurally supporting the planting unit(s) and/or controlling a position of the planting unit(s), as later described.

In some examples, act 410 comprises recommending, for each location, a rate of crop planting to be performed by the agricultural implement responsive to the indicator of crop population in the subregion in which said location lies. The rate of crop planting may be non-zero.

In particular, act 410 may be configured to recommend, for each location, the rate of crop planting performed by the agricultural implement to be greater when the indicator of crop population in the corresponding subregion indicates a lower crop population than when the indicator of crop population in the corresponding subregion indicates a higher crop population (e.g., to reduce a risk of overcrowding).

One approach to controlling the rate of crop planting is to control the spacing between planted crop responsive to the indicator of crop population. As such, act 410 may comprise, for each location, recommending a greater spacing between newly planted crop when the indicator of crop population in the corresponding subregion has indicates a greater crop population then when the indicator of crop population in the corresponding subregion indicates a lower crop population.

Another approach to controlling the rate of crop planting is to control the number of active planting units 501, 502, 503, 504 within the planter 500. In particular, as illustrated in FIG. 5, a planter may comprise a plurality of individual planting units 501, 502, 503, 504, each configured to plant crop. Accordingly, act 410 may be configured to recommend, for each location, how many of these individual planting units are active responsive to the indicator of crop population in the corresponding subregion.

In some examples, act 410 may comprise, for each location, recommending the position at which the crop is planted with respect to the agricultural vehicle responsive to the indicator of crop population in the corresponding subregion. The position at which the crop is planted may be defined as a lateral position with respect to the agricultural vehicle.

By way of example, act 410 may, for each location, generate a recommendation that the agricultural implement plant the crop along one or more first predetermined lines defined with respect to the agricultural vehicle responsive to the predicted indicator of crop population in the corresponding subregion indicating that the crop population is below a fifth threshold population; and generate a recommendation that the agricultural implement plant the crop at one or more second predetermined lines defined with respect to the agricultural vehicle responsive to the predicted indicator of crop population in the corresponding subregion indicating that the crop population is above the fifth threshold population. Each second predetermined line is offset from each first predetermined line.

The precise mechanism used by the agricultural implement to adjust the position(s) at which the crop is planted (responsive to a control by the control system) may be application-specific and is immaterial to the proposed approach.

For the sake of completeness, some further example approaches for performing act 410 for different forms of agricultural implement are hereafter described.

By way of example, when the agricultural implement comprises a sprayer, then act 410 may be configured to, for each location, recommend a rate or amount of spraying performed by the agricultural implement responsive to the indicator of crop population in the corresponding subregion. For instance, act 410 may be configured to adjust the recommended flow rate of sprayed materials (e.g., fertilizers, pesticides, herbicides) responsive to the indicator of crop population in the corresponding subregion. For locations lying in subregions with higher crop populations, act 410 may recommend an increased spray rate to ensure adequate coverage of the denser vegetation. Conversely, for locations lying in subregions with lower crop populations, act 410 may recommended a lower spray rate to avoid over-application and potential waste of resources.

As another example, when the agricultural implement comprises a sprayer, then act 410 may be configured to, for each location, recommend a spray pattern or nozzle configuration of the sprayer responsive to the indicator of crop population for the corresponding subregion. For example, for locations lying in subregions with higher crop populations, act 410 may generate a recommendation to activate additional spray nozzles or adjust the spray pattern to provide more thorough coverage. For locations lying in subregions with lower crop populations, act 410 may generate a recommendation to activate fewer nozzles or adjust the spray pattern appropriately.

As another example, when the agricultural implement comprises a sprayer, then act 410 may be configured to, for each location, recommend a composition or type of material being sprayed responsive to the indicator of crop population of the corresponding subregion. For instance, for locations lying in subregions with higher crop populations, a different fertilizer blend or pesticide formulation may be recommended compared to locations lying in subregions with lower crop populations, to address the specific needs of the crop in those different conditions.

When the agricultural implement comprises a plough or other tillage tool, act 410 may be configured to, for each location, recommend a ploughing/tillage depth, intensity, or pattern responsive to the indicator of crop population of the corresponding subregion. For instance, for locations lying in subregions with higher crop populations, act 410 may recommended a greater tillage depth or intensity to manage increased crop residue. For locations lying in subregions with lower crop populations, tillage may be less aggressive to preserve soil structure and moisture.

As yet another example, when the agricultural implement comprises a harvester, act 410 may be configured to, for each location, recommend one or more harvesting parameters responsive to the indicator of crop population of the corresponding subregion. For instance, for locations lying in subregions with higher crop populations, act 410 may recommend a greater speed of the harvester's cutting or threshing mechanisms to handle the increased volume of plant material. Conversely, for locations lying in subregions with lower crop populations, the recommended speed may be lower to ensure thorough collection of available crops.

Of course, a combination of any of the above described approaches for recommending the operation of the agricultural implement may be used. The above described approaches are not considered to be exhaustive, and other examples will be apparent to the skilled person.

The method 400 may further comprise an act 415 of controlling a user interface to provide a visual representation (i.e., display) of the recommended operation(s). This visual representation can be particularly useful for operators of the agricultural vehicle, allowing them to easily understand how the agricultural vehicle should be operated.

In some examples, act 415 comprises providing a visual representation of (e.g., only) the recommended operation for a nearest location to a current geographical location of the agricultural vehicle. Accordingly, the method 400 may comprise an act 310 of tracking the geographic location of the agricultural vehicle and providing, in act 415, a visual representation of (e.g., only) the nearest location to the tracked geographic location.

Of course, in some examples, act 415 is performed along with the act of providing a visual representation of the recommended route (not illustrated in FIG. 4). By way of example, the visual representation may display the recommended route as a path through the agricultural region, with different colors or patterns (or other visual indicators) along the path indicating different recommended operations at various locations. This integrated visual representation allows the operator to anticipate upcoming changes in implement operation as they follow the recommended route.

In some examples, the method 400 may comprise an act 420 of controlling the operation of the agricultural implement to follow the recommended operation. This act may be performed by an implement control system of the agricultural system. The implement control system may interface with various components of the agricultural implement, such as actuators, valves, or motors, to execute the recommended operations. For instance, it may activate or deactivate planting units, adjust spray nozzles, or control the flow of fertilizer based on the recommendation(s) generated in act 410 and the available functionality of the agricultural implement and/or agricultural vehicle.

In particular, in some examples, act 420 may comprise using a/the tracked location of the vehicle (determinable in act 310) and comparing this tracked location to the locations for which operations have been recommended. When the tracked location of the agricultural vehicle reaches or approaches one of these locations, act 520 may comprise using the implement control system to automatically execute the corresponding recommended operation.

Where the agricultural implement comprises a planter, it is noted that the crop planted by the planter (when the proposed method is executed) may differ from the existing crop for which the indicator of crop population is determined.

For instance, the planted crop may be a faster-growing variant of the existing crop, which could allow for more efficient use of the growing season or enable both the existing crop and the newly planted crop to be mature at a same time so that it may be harvested at a same time.

As another example, the planted crop may be a different cultivar or hybrid of the same species as the existing crop, e.g., selected for specific traits such as disease resistance, drought tolerance, or improved nutritional content. Alternatively, the planted crop could be an entirely different species chosen to complement the existing crop in a companion planting or crop rotation strategy.

It has been previously exemplified how the agricultural implement may comprise a planter and the recommended operation (which may be enacted in act 420) comprise a recommended adjustment to the position(s) at which the crop is planted (responsive to a control by the control system). The skilled person will appreciate that the precise mechanism used by the agricultural implement perform this task may be application-specific and is immaterial to the proposed approach.

Nonetheless, for the sake of completeness, some example approaches are hereafter described. In the context of such approaches, it is noted that the agricultural implement may comprise a plurality of planting units 501, 502, 503, 504, which are laterally displaced from one another are each configured to plant crop and are each separately controllably responsive to control signals provided by the control system.

The agricultural implement 500, for instance the planting apparatus 520, may be equipped with one or more mechanisms 525 to shift the planting units side-to-side. For instance, the agricultural implement 500 may include a row unit shifter mechanism 525 that allows for lateral adjustment of individual planting units or groups of planting units. This mechanism may comprise one or more hydraulic cylinders, electric actuators, or mechanical linkages to move the planting units side-to-side relative to a main frame 528 of the implement. Act 420, if performed, may comprise sending signals from a control unit to the row unit shifter 525 to adjust the lateral position of planting units (to follow the recommended operation of the agricultural implement).

In some examples, act 420 (if performed) may control which planting units are activated, such that a first set of agricultural units 501, 503 may be activated to plant crop along one or more first predetermined lines and a second set 502, 504 of agricultural units may be activated to plant crop along one or more second predetermined lines. In this approach, the planting units are laterally displaced from one another. Thus, in this approach, act 420 may comprise selectively activating or deactivating specific planting units to plant crop along desired predetermined lines.

Each first predetermined line may be a line along which existing crop was planted. Thus, the agricultural vehicle may store or retrieve planting information that identifies where crop was initially planted (e.g., with respect to a path of the agricultural vehicle) during an earlier planting procedure. Act 420 may comprise accessing this stored planting data to determine the first predetermined lines corresponding to existing crop rows.

This reduces a risk that new crop will overplant existing crop when there is sufficient crop population. By planting along the first predetermined lines when the crop population is below the second threshold, the system may fill in gaps or areas of low density in existing crop rows. When the crop population is above the second threshold, planting along offset second predetermined lines helps avoid overcrowding and competition for resources.

In some cases, act 420 may be configured to perform more granular positioning control, if identified. For example, the lateral offset of the second predetermined lines from the first predetermined lines may be variable and proportional to the indicator of crop population. A higher detected crop population may result in a larger lateral offset to provide more space between existing and newly planted crops.

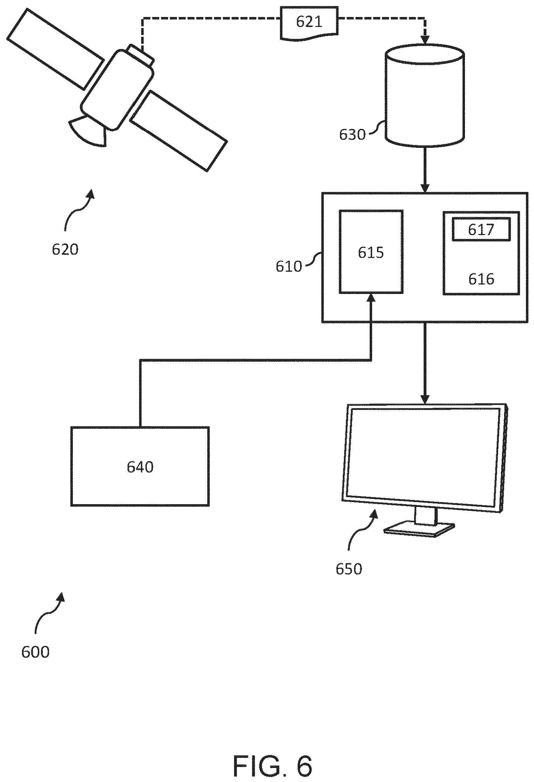

FIG. 6 illustrates an agricultural system 600 in which embodiments may be employed, for improved contextual understanding.

The agricultural system 600 comprises at least one processor 615.

The at least one processor is configured to perform to perform the function(s) of herein described method 100 (FIG. 1). Thus, the at least one processor 615 is configured to receive image data of an agricultural region to undergo an agricultural task; process the image data to determine, as a plurality of indicators of crop population, a respective indicator of crop population for each of a plurality of subregions of the agricultural region; and determine a recommended route for an agricultural vehicle, for performing the agricultural task in the agricultural region, responsive to the plurality of indicators of crop population.

In some examples, the at least one processor 615 may be formed as an aspect of a processing system 610 comprises the at least one processor 615 and at least one memory 616 carrying instructions 617 that, when executed, cause the at least one processor to perform the function(s) of herein described method 100 (FIG. 1).

Each at least one processor may be embodied as, for instance, one or more pieces of general-purpose and/or fixed function circuitry, such as a general-purpose microprocessor (e.g., a CPU), a field-programmable gate array (FPGA), an appropriately configured application-specific integrated circuit (ASIC), and/or a distributed processing arrangement (e.g., comprising multiple interconnected processing units working in parallel). Where relevant, the at least one processor may comprise a neural network accelerator or similar, which may be particularly advantageous when one or more neural networks are employed to perform a function or act of a proposed method.

The image data received by the at least one processor may be generated by an imaging system 620 configured to generate image data 621 of the agricultural region, e.g., using a camera 625. Thus, the agricultural system 600 may comprise the imaging system 620.

As is well known in the art, image data is a data representation of the visual appearance of an imaged region, such that the image data 621 is a data representation of the appearance of the agricultural region. Thus, the agricultural region is represented within the image 621. The precise mechanism by which an image is captured by the imaging system is immaterial for the purposes of the present disclosure, as well as being well known in the art.

In some examples, the imaging system 620 may comprise a satellite imaging system (e.g., comprising a satellite) configured to capture an image of the agricultural region. Thus, the image of the agricultural region may be captured using a satellite imaging technique. As an alternative example, the imaging system may comprise an aerial photographing system (e.g., a manned or unmanned vehicle). In this way, the image of the agricultural region may be captured using an aerial photography technique.

The image data 621 produced by the imaging system 620 may be stored in a database 630, e.g., a cloud-based storage system, of the agricultural system 600. The at least one processor 615 may receive the image data 621 from the imaging system and/or the database 630 Alternatively, the image data produced by the imaging system may be directly passed to the processing system 650.

In some examples, the agricultural system 600 further comprises a vehicle tracking system 640 configured to track a geographic location of the agricultural vehicle. The at least one processor 615 may be configured to determine and update the recommended route using at least the tracked geographic location of the agricultural vehicle.

As one example, the vehicle tracking system may comprise a satellite-based geographic positioning system (e.g., a GPS-based system or a Galileo-based system) comprising at least one tracking element mounted to the agricultural vehicle. In such an approach, the tracking element(s) may receive signals from a plurality of satellites and calculate the agricultural vehicle's geographic location using well-known approaches.

As another example, the vehicle tracking system may comprise an Inertial Navigation System (INS), which employs accelerometers and/or gyroscopes to track the vehicle's position and orientation relative to a known starting point. This can be used in combination with a satellite-based geographic positioning system to accurately track the geographic location of the vehicle, even in areas of poor satellite coverage.

As another example, the vehicle's location may be determined using cellular network triangulation/multilateration, where the position of the vehicle is calculated based on signals received at or from multiple cellular towers at known locations.

In one cellular network triangulation/multilateration approach, sometimes known as Uplink Time Difference of Arrival (UTDOA), multiple cellular towers detect signals emitted by a transmitter carried by the agricultural vehicle. The strength and timing of these signals are measured at each tower. By comparing the differences in signal strength and arrival times at multiple towers, the system can calculate the vehicle's geographic location.

In another cellular network triangulation/multilateration approach, sometimes known as Observed Time Difference of Arrival (OTDOA), involves a receiver carried by the vehicle recording the time it takes for signals to arrive from different cellular towers. By comparing these timing differences and knowing the fixed locations of the towers, the system is able to calculate the vehicle's geographic location.

Other suitable approaches and corresponding systems for tracking the geographic location of the agricultural vehicle are known in the art, e.g., eLORAN or a radio navigation system. Any one or more of the approaches outlined above or otherwise known may be employed.

In some examples, the agricultural system 600 may comprise a user interface 650 configured to provide a visual representation of the recommended route. In particular, the at least one processor may be configured to control the operation of the user interface to provide the visual representation of the recommended route.

The agricultural system may comprise other components to perform the functions of any herein described method as appropriate, e.g., a vehicle control system, an implement control system, the agricultural vehicle itself and/or the agricultural implement of the agricultural vehicle.

It will be appreciated that the components of the agricultural system 600 may be distributed across different locations, e.g., across an agricultural vehicle and one or more external devices such as cloud computing servers.

In some examples, the agricultural vehicle may be equipped with (e.g., mount or carry) one or more components of the agricultural system. These on-vehicle components may include (where appropriate and/or forming part of the agricultural system) the vehicle tracking system, a vehicle control system, an implement control system, and/or a user interface for displaying information to the operator. The agricultural vehicle may also include a local processing unit capable of performing one or more functions of the proposed method(s).

One or more external devices (to the agricultural system), such as cloud computing servers or a cloud computing platform, may host other components of the agricultural system. For instance, a database storing image data may be maintained on a cloud-based storage system. The processing system, including the at least one processor configured to perform the main functions of the agricultural system, may also be implemented on a cloud computing server/platform.

Of course, in some implementations, the agricultural system may employ a hybrid approach where processing tasks are distributed between the agricultural vehicle and external devices. For example, the local processing unit on the vehicle may perform real-time tasks such as generating and (if relevant) updating the recommended route (e.g., based on the current location), while more computationally intensive tasks like processing image data to determine indicator of crop populations may be offloaded to external servers.

Thus, in some examples, the agricultural system may comprise an agricultural vehicle comprising a first processing system having at least one processor configured to perform at least act 130 of method 100 (FIG. 1) and, where appropriate and if performed, acts 140, 320 (of method 300 (FIG. 3)), 410 and 420 (of method 400 (FIG. 4)). This agricultural system may further comprise a second processing system, external and separate to the agricultural vehicle, configured to perform at least acts 110 and 120 of method 100 (FIG. 1).

The agricultural system may make use of any suitable or known communication technology to enable data exchange between the agricultural vehicle and any external device or processing system. These may include cellular networks, satellite communication systems, or long-range Wi-Fi networks (e.g., LoRAN).

It will be understood that disclosed methods are preferably computer-implemented methods. As such, there is also proposed the concept of a computer program comprising code means for implementing any described method when said program is run on at least one processor, such as a computer. Thus, different portions, lines or blocks of code of a computer program according to an embodiment may be executed by at least one processor (of an agricultural system) to perform any herein described method.

A computer program may be stored on a computer-readable medium, itself an embodiment of the disclosure. A "computer-readable medium" is any suitable mechanism or format that can store a program for later processing by at least one processor. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing embodiments of the disclosure, from a study of the drawings, the disclosure and the appended claims. In the claims, the word "comprising" does not exclude other elements or acts, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable non-transitory medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. An agricultural system comprising at least one processor configured to:
receive image data of an agricultural region to undergo an agricultural task;
process the image data to determine, as a plurality of indicators of crop population, a respective indicator of crop population for each of a plurality of subregions of the agricultural region; and
determine a recommended route for an agricultural vehicle, for performing the agricultural task in the agricultural region, responsive to the plurality of indicators of crop population.

2. The agricultural system of claim 1, wherein the image data comprises satellite imaging data and/or aerial photography data.

3. The agricultural system of claim 1 or 2, wherein the agricultural task is a crop planting operation, and the agricultural vehicle comprises a planter for performing the crop planting operation.

4. The agricultural system of any one of claims 1 to 3, wherein the recommended route comprises one or more recommended waylines for the agricultural vehicle to follow.

5. The agricultural system of any one of claims 1 to 4, wherein the at least one processor is configured to:
process the plurality of indicators of crop population to identify, if present, one or more target subregions comprising each, if any, subregion for which the respective indicator of crop population indicates a crop population below a first population threshold; and
determine, as the recommended route, a route that, if followed by the agricultural region, would facilitate the performance of the agricultural task in each, if any, target subregion by the agricultural vehicle.

6. The agricultural system of any one of claims 1 to 5, wherein the recommended route avoids traversing the entirety of the agricultural region.

7. The agricultural system of any one of claims 1 to 6, wherein the at least one processor is configured to:
process the plurality of indicators of crop population to identify, if present, one or more restricted subregions comprising each, if any, subregion for which the respective indicator of crop population indicates a crop population above a second population threshold; and
determine, as the recommended route, a route that, if followed by the agricultural region, would avoid at least one of the one or more restricted subregions.

8. The agricultural system of any one of claims 1 to 7, wherein the agricultural system comprises a vehicle tracking system configured to track a geographic location of the agricultural vehicle, and
wherein the at least one processor is configured to determine and update the recommended route using at least the tracked geographic location of the agricultural vehicle.

9. The agricultural system of claim 8, wherein the vehicle tracking system comprises a satellite-based geographic positioning system comprising at least one tracking element mounted to the agricultural vehicle; optionally where the agricultural system further comprises a vehicle control system configured to automatically control a travel direction of the agricultural vehicle to follow the recommended route using the tracked geographic location of the agricultural vehicle.

10. The agricultural system of any one of claims 1 to 9, wherein each indicator of crop population is a measure of predicted crop density in the respective subregion.

11. The agricultural system of any one of claims 1 to 10, wherein the at least one processor is configured to process the image data using a machine-learning method to determine, as the plurality of indicators of crop population, the respective indicator of crop population for each of the plurality of subregions of the agricultural region.

12. The agricultural system of any one of claims 1 to 11, wherein the at least one processor is further configured to determine a recommended operation for an agricultural implement of the agricultural vehicle at each of a plurality of locations along the recommended route responsive to the plurality of indicators of crop populations; optionally wherein each recommended operation indicates a recommendation of whether or not to activate the agricultural implement at each of the plurality of locations.

13. The agricultural system of claim 12, wherein, for each of the plurality of locations, the recommended operation for said location indicates a recommendation to activate the agricultural implement responsive to said location lying in a subregion for which the respective indicator of crop population indicates a crop population below a third population threshold; or wherein, for each of the plurality of locations, the recommended operation for said location indicates a recommendation to deactivate the agricultural implement responsive to said location lying in a subregion for which the respective indicator of crop population indicates a crop population above a fourth population threshold.

14. The agricultural system of any one of claims 12 to 13, further comprising an implement control system configured to control the operation of the agricultural implement of the agricultural vehicle to follow the recommended operation.

15. An agricultural system comprising:
the agricultural system of any one of claims 1 to 14; and
the agricultural vehicle.

16. A computer-implemented method comprising:
receiving image data of an agricultural region to undergo an agricultural task;
processing the image data to determine, as a plurality of indicators of crop population, a respective indicator of crop population for each of a plurality of subregions of an agricultural region; and
determining a recommended route for an agricultural vehicle, for performing an agricultural task in the agricultural region, responsive to the plurality of indicators of crop populations.
